# EUROPEAN PATENT SPECIFICATION

(11) **EP 2 606 779 B1**
(45) Date of publication and mention of the grant of the patent: **05.11.2014**
(21) Application number: 12008345.6
(22) Date of filing: 14.12.2012
(51) Int. Cl.: A47J 31/36

(54) **Infusion unit**
Infusionseinheit
Unité d'infusion

(30) Priority: 22.12.2011 IT BG20110052
(43) Date of publication of application: 26.06.2013
(73) Proprietor: EMMEBIELLE S.R.L., 21049 Tradate (VA) (IT)
(72) Inventor: Blanchino, Francesco, 22076 Mozzate (CO) (IT); Manunta, Mauro, 21049 Tradate (VA) (IT)
(74) Representative: Gatti, Enrico

(56) References cited:
- WO-A1-2010/103044
- WO-A2-2010/118545
- FR-A1- 2 745 995

## Description

The present invention relates to an infusion unit for machines for preparing beverages of coffee or of other type. The infusion is prepared from capsules or paper pods.

Capsules are normally formed of plastic and/or aluminium and are structured with a cylindrical and/or frusto-conical hollow body. The upper and lower surfaces comprise small perforations and possibly filtering films positioned on the inside of these surfaces, or are sealed and the perforations made by points positioned on the chamber and/or on the piston. They are generally provided with a projecting edge on their front part as a support means. They are of substantially conical shape with a water inlet in the front part of greater diameter and a water outlet in the rear part of lesser diameter or vice versa.

Paper pods are normally formed from two sheets of food-quality filter paper of various shapes, the most widespread shape being circular of various diameters and various thicknesses, with a slight circular rim which closes the pod, and possibly a tab positioned on the rim, for gripping the pod.

Such infusion units normally comprise an infuser which feeds a pressurized fluid into the infusion chamber, such that it is able to pass through the capsule and form the infusion.

For this purpose, the infusion units of the known art comprise capsule receiving and handling means which enable it to be properly received, aligned and inserted into the infusion chamber, and enable it to be expelled from the infusion chamber when the beverage has been dispensed.

There are various automatic or semi-automatic machines which use these capsules.

In these machines, provision must be made for insertion of the new capsule and expulsion of the used capsule.

There are various known methods for capsule insertion and expulsion. An infusion unit comprising the features of the preamble of claim 1 is known from WO 2010/103044.

An object of the present invention is to provide a new infusion unit for preparing coffee beverages which enables the capsule to be guidedly inserted, positioned, locked during the infusion and then expelled. Another object is to provide an infusion unit of small dimensions and with a reduced number of moving pieces.

A further object is to define an infusion unit consisting of simple and reliable mechanisms.

These and other objects are attained according to the present invention by an infusion unit for beverage preparation comprising: an operating lever for a piston with a capsule-containing seat having an open first position and a closed second position; said piston being arranged to move rectilinearly along one direction and having a third position for capsule insertion and a fourth position for infusion; a chute for introducing an individual capsule having a fifth position for capsule insertion and a sixth position for infusion; when said lever is in said first position said piston is in said third position and said chute is in said fifth position; when said lever is in said second position said piston is in said fourth position and said chute is in said sixth position; when said piston is in said fourth position and said chute is in said sixth position said chute abuts against said capsule-containing seat of said piston; characterised in that said introduction chute when in said fifth position for capsule insertion is inclined at about 30° to the vertical, and when in said sixth infusion position is vertical.

Further characteristics of the invention are described in the dependent claims.

The characteristics and advantages of the present invention will be apparent from the ensuing detailed description of a first embodiment thereof, illustrated by way of non-limiting example in the accompanying drawings, in which:
Figure 1 is a schematic sectional lateral view of an infusion unit during a capsule insertion stage, in accordance with the present invention;
Figure 2 is a schematic sectional lateral view of an infusion unit during a capsule positioning stage, in accordance with the present invention;

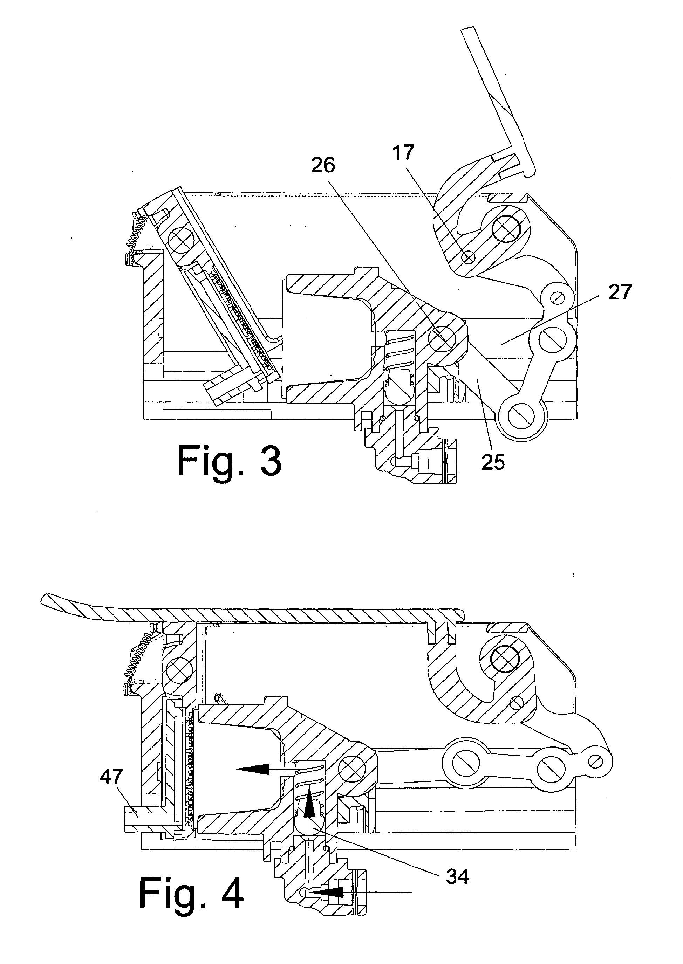

Figure 3 is a schematic sectional lateral view of an infusion unit during an intermediate closure stage, in accordance with the present invention;
Figure 4 is a schematic sectional lateral view of an infusion unit during a closure stage, in accordance with the present invention;

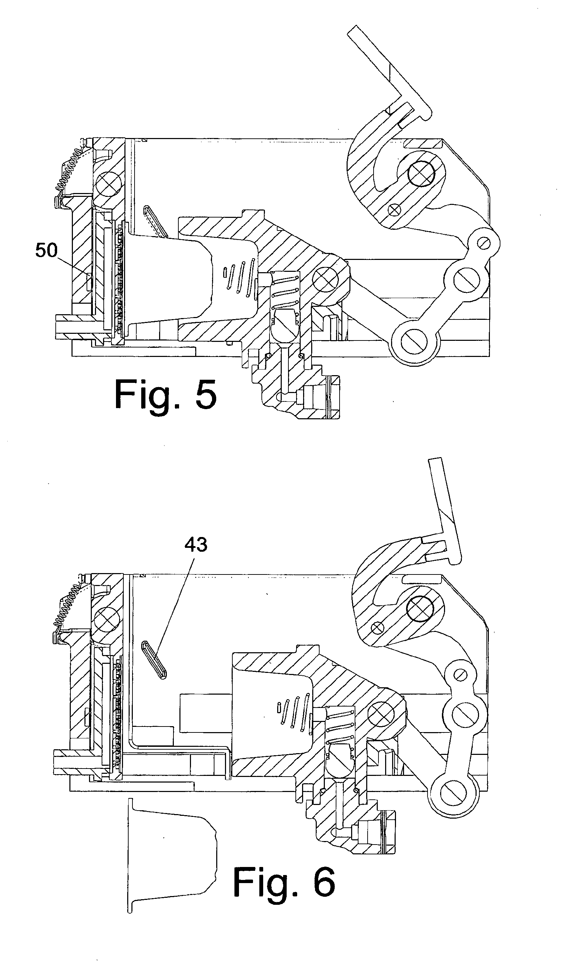

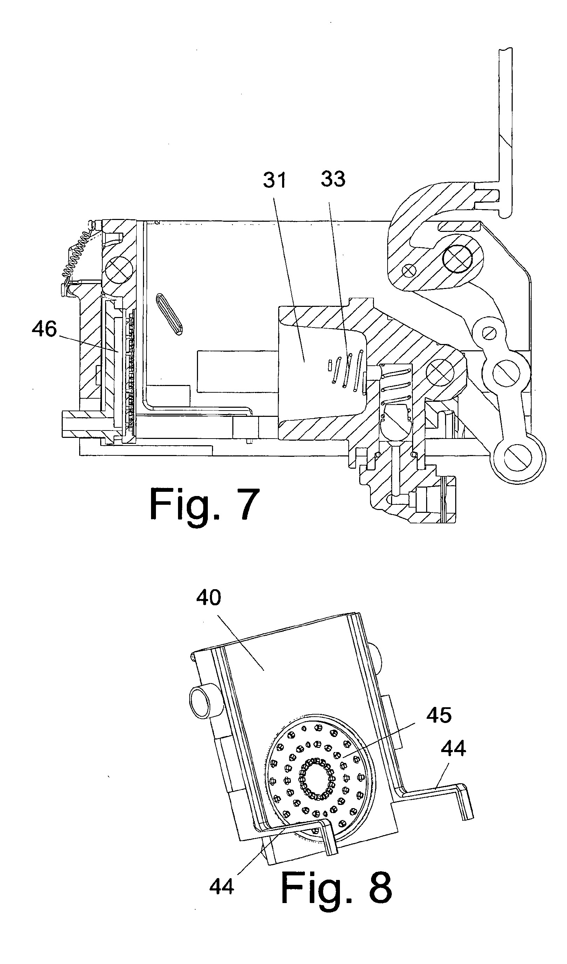

Figure 5 is a schematic sectional lateral view of an infusion unit during an opening commencement stage, in accordance with the present invention;
Figure 6 is a schematic sectional lateral view of an infusion unit during a capsule expulsion stage, in accordance with the present invention;

The infusion unit 10 comprises a frame having a pair of frame-containing shoulders 11 joined together by pegs.

An operating lever 13 is pivoted on a pin 14 fixed onto the shoulders, in a top corner thereof.

In particular, the lever 13 has a rectilinear gripping portion and a substantially U-shaped terminal portion 16 in which the ends of the U are fixed, one to the lever 13 and the other to the pin 14 rotatable about a hole in the shoulders 11.

About half way along the terminal portion 16 a free pin 17 is fixed, to which one end of a rod 20 is fixed.

Another rectilinear rod 21, pivoted about half way along its length on a pin 22 rotatable about a hole positioned in the shoulders 11, has one end connected to a free pin 23 to which the other end of the rod 20 is connected. The other end of the rod 21 is pivoted on a free pin 24 to which one end of a further rectilinear rod 25 (connecting rod) is connected. The other end of the rod 25 is pivoted on a pin 26 which can slide along two rectilinear guides 27 positioned horizontally on the two shoulders 11. The pin 22 is positioned below and external to the pin 14 and is aligned with the guides 27.

The pin 26 is fixed (in rotatable manner) to a piston 30 with a capsule-containing seat, which internally is of frusto-conical shape reproducing the shape of a capsule and having a front diameter greater than the rear diameter.

On moving the lever 13 from a vertical position to a horizontal position, the lever system composed of the elements 13, 15, 20, 21, 25, enables the piston 30 to slide along a sliding direction between a capsule insertion position and an infusion position.

When the lever 13 is positioned vertically the lever 21 is also positioned substantially vertical, and in this manner the pin 26 positions itself at one end thereof, consequently bringing the piston 30 into its capsule insertion position.

When the lever 13 is lowered to become horizontal, the lever 20 urges the pin 23 outwards to bring the lever 21 horizontal, to hence withdraw the pin 26 and position it at its other end, consequently bringing the piston 30 into its infusion position.

The piston 30 has a cavity 31 in the shape of a capsule 32. On the base of the cavity there is a spring 33 and means (not shown) of lesser diameter, for perforating the capsule surface. The infusion liquid inlet conduit 34 is positioned on the rear of the cavity 31.

To the side of the piston there are fixed two rectilinear bars 35 slidable along two guides 36 positioned horizontally on the two shoulders 11. At the front end of the bars 35, each of these presents a hook 37 (pointing towards the interior of the infusion unit). In particular, it is made up from two bars 35 with their front end having a foot 37 directed towards the interior.

Opposite the piston 30 there is a chute 40 which can be swivelled about a pin 41 fixed to the shoulders 11 in a top corner opposite the pin 14.

When in its capsule insertion position, the chute 40 is inclined towards the piston 30 by an angle of about 30° to the vertical, and is retained in this position by a spring 42 fixed at one end to the upper end of the chute 40 and at the other end to a closure wall for the shoulders 11 (on the infusion liquid exit wall) of the frame of the infusion unit 10. This spring 42 urges the chute 40 upwards until it abuts against a stop 43 fixed to the shoulders 11.

When in its infusion position, the chute 40 is positioned vertically and abuts against the infusion liquid exit wall of the frame of the infusion unit 10.

The chute 40 is a structure substantially of parallelepiped form with the exception of two ramps 44 (with a downwardly directed hook on each) which extend at an angle of 90° from the bottom of the chute 40 towards the piston 30 and arranged to cooperate with the hooks 37.

That surface of the chute 40 in front of the piston 30 presents a recess which is the negative of the larger surface of the capsule 32, and includes perforation needles 45 for the capsule 32 and relative holes for passage of the infusion liquid.

To the rear of the perforation needles 45 (if the capsule needs to be perforated, or of the holes present in the capsule) on the inside of the chute 40, there is a chamber 46 for collecting the infusion liquid, connected to an infusion exit conduit 47.

A magnet 50 is positioned on the infusion liquid exit wall of the frame of the infusion unit 10, at about the height of the cavity 31 of the piston 30, to cooperate with the rear surface (at least partly of metal) of the chute 40.

The figures show only one side of the infusion unit 10, a good part of the aforedescribed elements being present in the infusion unit in pairs, all being fixed rigidly or movably to the shoulders 11.

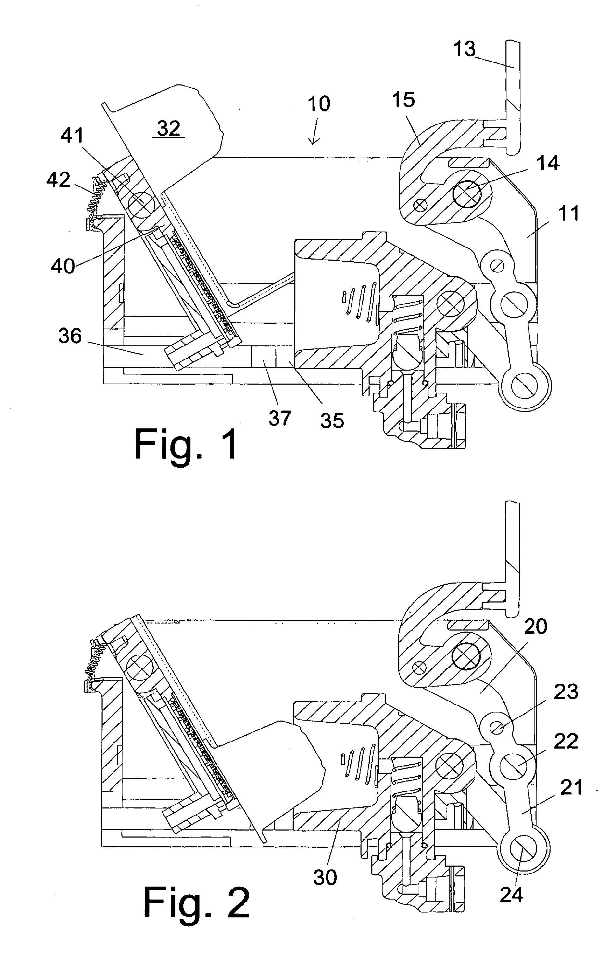

The operation of the device according to the invention is apparent from that described and illustrated and is substantially as follows. With the lever 13 in the open position as shown in Figure 1, i.e. virtually vertical, the user inserts a capsule 32. During this stage the cavity 31 is positioned horizontally in its capsule insertion position and hence more withdrawn, the lever 21 being positioned substantially vertical. The chute 40 is inclined towards the cavity 31, and is retained in position by the spring 42.

The capsule 32 slides along the chute 40, on its greater diameter surface, and comes to rest against the mouth of the cavity 31.

At this point the operator, either manually or by automatic means, moves the lever 13, or any other equivalent means, from its capsule insertion position to its working position or infusion position, hence causing the piston 30 to translate such as to approach the chute 40. In particular, the lever 13 on being lowered urges the rod 20 outwards, this in succession causing the rod 21 to rotate about the pin 22 and seeking to bring it horizontal.

The rod 21 thrusts the connecting rod 25 and hence the pin 26 which, being fixed on the piston 30, causes this latter to advance. As the piston 30 advances, the capsule 32 is straightened, positioning itself with its central axis horizontal then, being urged by the stem of the chute 40, enters the cavity 31 of the piston 30.

On further closing the lever 13, the piston 30 urges the chute 40 into the vertical position by overcoming the resistance of the spring 42, and the capsule 32 becomes inserted completely into the cavity 31 by overcoming the resistance of the spring 33.

In the meantime the two ramps 44, which are initially inclined upwards at an angle of 30° to the horizontal, are lowered and the hooks 37 advance.

When in the closed position the lever 13 is substantially horizontal, as are the rods 25 and 21, and the ramps 44 become positioned to the side of the bars 35. The hooks 37 are advanced to a point (they reach in proximity to the chute 40) such that the ramps 44 are spaced from them by a length greater than the dimension of the capsule 32.

The force of the magnet 50 maintains the chute 40 vertical, the piston 30 being in the infusion position in its most advanced position.

A suitable sensor (not shown) controls the supply of water to the infusion unit 10 and in particular supplies it to the entry conduit 34 for the infusion liquid, which passes via the capsule 32, entering from its rear side, i.e. via its smaller-diameter surface. It passes from its larger-diameter surface and then through the perforations 45, to collect in the chamber 46 and leave by the infusion exit conduit 47. On again opening the infusion unit 10, i.e. when the user raises the lever 13 to return it to the open or vertical position, the piston 30 retracts and the spring 33 urges the capsule 32 against the chute 40. The chute 40 remains in its vertical position by the force of the magnet 50.

On withdrawing the piston 30 by a space slightly greater than the dimension of the capsule 32, this finds that the space below it is sufficient to enable it to fall into a collection region.

In the meantime the bars 35 withdraw together with the hooks 37, until the ramps 44 abut against them.

On further withdrawing the piston 30, the hooks 37 pull the ramps 44 and consequently the chute 40, overcoming the attraction force of the magnet 50. At this point, the spring 42 inclines the chute 40 to bring it into its rest position (for capsule insertion).

The piston 30 returns to its initial position for inserting the capsule 32. By virtue of the present arrangement, in which the infusion liquid is inserted into the capsule in reverse, i.e. it enters from the rear of the capsule (smaller-diameter surface) and leaves from the front (larger-diameter surface), the number of pieces required for the mechanism is reduced. The chute 40 serves for inserting the capsule but also acts as a closure for the piston housing seat and as a collector for the infusion liquid.

The aforedescribed infusion unit 10 is adaptable substantially to any type of capsule. In particularly, it is also suitable for capsules without the usual pronounced edge.

The aforedescribed infusion unit 10 is also usable for infusions with paper pods, it requiring only the housing seat in the piston to be modified to adapt it to the shape and dimensions of the pod, whereas all the mechanisms remain unaltered.

The lever 13 can be operated manually or can be activated by a suitable electric motor with relative speed reducer, operated for example by a sensor (or switch) activated at the moment of inserting the capsule into the infusion unit 10.

Advantageously, by virtue of its shape, this infusion unit 10 can also be used with automatic loaders, by arranging a loader in proximity to the chute.

The infusion unit 10 described here will not be further detailed as an expert of the art is able to implement it on the basis of the aforegoing description.

The materials used and the dimensions can be chosen at will according to requirements and to the state of the art.

The infusion unit 10 conceived in this manner is susceptible to numerous modifications and variants, all falling within the scope of the inventive concept; moreover all details can be replaced by technically equivalent elements.

## Claims

1. An infusion unit for beverage preparation comprising: an operating lever for a piston with a capsule-containing seat having an open first position and a closed second position; said piston being arranged to move rectilinearly along one direction and having a third position for capsule insertion and a fourth position for infusion; a chute for introducing an individual capsule having a fifth position for capsule insertion and a sixth position for infusion; when said lever is in said first position said piston is in said third position and said chute is in said fifth position; when said lever is in said second position said piston is in said fourth position and said chute is in said sixth position; when said piston is in said fourth position and said chute is in said sixth position said chute abuts against said capsule-containing seat of said piston; **characterised in that** said introduction chute when in said fifth position for capsule insertion is inclined at about 30° to the vertical, and when in said sixth position for infusion is vertical.

2. An infusion unit as claimed in claim 1, **characterised in that** said capsule-containing seat of said piston is of frusto-conical shape reproducing the shape of said capsule, and has a front surface greater than a rear surface; said infusion unit comprising a infusion liquid conduit applied to said capsule-containing seat of said piston within said rear surface.

3. An infusion unit as claimed in one of the preceding claims, **characterised in that** said chute presents a recess which is the negative of the larger surface of the capsule, and includes perforation needles for the capsule and relative holes for passage of the infusion liquid.

4. An infusion unit as claimed in one of the preceding claims, **characterised in that** said chute comprises in its interior an infusion liquid collection chamber connected to an infusion exit conduit.

5. An infusion unit as claimed in one of the preceding claims, **characterised in that** said chute rearwardly comprises first means arranged to cooperate with second means positioned on the frame of said infusion unit and connectable together and removable from each other, to maintain said chute in said sixth position for infusion.

6. An infusion unit as claimed in one of the preceding claims, **characterised in that** said chute comprises front hooks arranged to cooperate with respective hooks associated with said piston able to return said chute into said fifth position when said piston is brought into said third position for inserting a capsule.

7. An infusion unit as claimed in one of the preceding claims, **characterised in that** said chute comprises a spring fixed at an upper end to said frame of said infusion unit to maintain said chute in said fifth position for inserting a capsule.

8. An infusion unit as claimed in one of the preceding claims, **characterised in that** said capsule-containing seat of said piston comprises in its interior a spring for expelling said capsule.

## Patentansprüche

1. Infusionseinheit zur Getränkezubereitung mit: einem Betätigungshebel für einen Kolben mit einem eine Kapsel aufnehmenden Sitz, der eine offene erste Position und eine geschlossene zweite Position hat; wobei der Kolben ausgestaltet ist, um sich gradlinig entlang einer Richtung zu bewegen, und eine dritte Position zum Einsetzen der Kapsel und eine vierte Position zwecks Infusion hat; einer Rinne zum Einsetzen einer einzelnen Kapsel, die eine fünfte Position zum Einsetzen der Kapsel und eine sechste Position zwecks Infusion hat; wobei, wenn sich der Hebel in der ersten Position befindet, sich der Kolben in der dritten Position befindet und sich die Rinne in der fünften Position befindet; wobei, wenn sich der Hebel in der zweiten Position befindet, sich der Kolben in der vierten Position befindet und sich die Rinne in der sechsten Position befindet; wobei, wenn sich der Kolben in der vierten Position befindet und sich die Rinne in der sechsten Position befindet, die Rinne gegen den die Kapsel aufnehmenden Sitz des Kolbens anliegt; **dadurch gekennzeichnet, dass** die Rinne zum Einsetzen, wenn sie sich in der fünften Position zum Einsetzen der Kapsel befindet, um etwa 30" bezüglich der Vertikalen geneigt ist, und vertikal verläuft, wenn sie sich in der sechsten Position zwecks Infusion befindet.

2. Infusionseinheit nach Anspruch 1, **dadurch gekennzeichnet, dass** der die Kapsel aufnehmende Sitz des Kolbens eine kegelstumpfförmige Gestalt hat, die der Gestalt der Kapsel entspricht, und eine vordere Fläche aufweist, die größer ist als eine hintere Fläche; wobei die Infusionseinheit eine Infusionsflüssigkeitsleitung aufweist, die dem die Kapsel aufnehmenden Sitz des Kolbens in der hinteren Fläche zugeführt ist.

3. Infusionseinheit nach einem der vorhergehenden Ansprüche, **dadurch gekennzeichnet, dass** die Rinne eine Aussparung hat, die komplementär zur größeren Fläche der Kapsel ist und Perforationsnadeln für die Kapsel sowie zugehörige Löcher zum Durchleiten der Infusionsflüssigkeit aufweist.

4. Infusionseinheit nach einem der vorhergehenden Ansprüche, **dadurch gekennzeichnet, dass** die Rinne in ihrem Inneren eine Infusionsflüssigkeits-Sammelkammer aufweist, die mit einer Infusionsauslassleitung verbunden ist.

5. Infusionseinheit nach einem der vorhergehenden Ansprüche, **dadurch gekennzeichnet, dass** die Rinne hinten eine erste Einrichtung aufweist, die ausgestaltet ist, um mit einer zweiten Einrichtung zusammenzuwirken, die an dem Rahmen der Infusionseinheit angeordnet ist und die miteinander verbunden und voneinander getrennt werden können, um die Rinne zwecks Infusion in der sechsten Position zu halten.

6. Infusionseinheit nach einem der vorhergehenden Ansprüche, **dadurch gekennzeichnet, dass** die Rinne vordere Haken aufweist, die ausgestaltet sind, um mit zugehörigen Haken zusammenzuwirken, die mit dem Kolben in Beziehung stehen und in der Lage sind, um die Rinne in die fünfte Position zurückzubewegen, wenn der Kolben zum Einsetzen einer Kapsel in seine dritte Position gebracht wird.

7. Infusionseinheit nach einem der vorhergehenden Ansprüche, **dadurch gekennzeichnet, dass** die Rinne eine Feder aufweist, die an einem oberen Ende des Rahmens der Infusionseinheit befestigt ist, um die Rinne zum Einsetzen einer Kapsel in der fünften Position zu halten.

8. Infusionseinheit nach einem der vorhergehenden Ansprüche, **dadurch gekennzeichnet, dass** der die Kapsel aufnehmende Sitz des Kolbens in seinem Inneren eine Feder aufweist, um die Kapsel auszuwerfen.

## Revendications

1. Unité d'infusion pour préparation d'une boisson, comprenant: un levier d'actionnement d'un piston ayant un siège contenant une capsule, ayant une première position ouverte et une deuxième position fermée ; le piston étant agencé pour se déplacer de manière rectiligne le long d'une direction et ayant une troisième position pour insertion d'une capsule et une quatrième position pour infusion ; une goulotte pour l'introduction d'une capsule individuelle ayant une cinquième position pour insertion d'une capsule et une sixième position pour infusion ; lorsque le est dans la première position le piston est dans la troisième position et la goulotte est dans la cinquième position ; lorsque le levier est dans la deuxième position le piston est dans la quatrième position et la goulotte est dans la sixième position ; lorsque le piston est dans la quatrième position et la goulotte est dans la sixième position la goulotte vient en butée contre le contenant une capsule du piston ; **caractérisée en ce que** la goulotte d'introduction lorsqu'elle est dans la cinquième position pour insertion d'une capsule est inclinée d'environ 30° par rapport à la verticale, et lorsqu'elle est dans la sixième position pour infusion elle est verticale.

2. Unité d'infusion selon la revendication 1, **caractérisée en ce que** le siège du piston contenant une capsule a une forme tronconique représentant la forme de la capsule, et a une surface avant plus grande qu'une surface arrière ; l'unité d'infusion comprenant un conduit de liquide d'infusion appliqué au siège contenant une capsule du piston, dans la surface arrière.

3. Unité d'infusion selon l'une quelconque des revendications précédentes, **caractérisée en ce que** la goulotte présente un évidement qui est le négatif de la surface plus grande de la capsule, et comprend des aiguilles de perforation de la capsule et des trous relatifs pour le passage du liquide d'infusion.

4. Unité d'infusion selon l'une quelconque des revendications précédentes, **caractérisée en ce que** la goulotte comprend dans sa partie intérieure une chambre de recueil de liquide d'infusion reliés à un conduit de sortie d'infusion.

5. Unité d'infusion selon l'une quelconque des revendications précédentes, **caractérisée en ce que** la goulotte comprend vers l'arrière des premiers moyens agencés pour coopérer avec des seconds moyens positionnés sur le châssis de l'unité d'infusion et pouvant être reliés ensemble et amovibles l'un par rapport à l'autre, pour maintenir la goulotte dans la sixième position pour infusion.

6. Unité d'infusion selon l'une quelconque des revendications précédentes, en ce que la goulotte comprend des crochets avant agencés pour coopérer avec des crochets respectifs associés au piston, capables de ramener la goulotte dans la cinquième position lorsque le piston est amené dans la troisième position pour insertion d'une capsule.

7. Unité d'infusion selon l'une quelconque des revendications précédentes, **caractérisée en ce que** la goulotte comprend un ressors fixé à une extrémité supérieure sur le châssis de l'unité d'infusion pour maintenir la goulotte dans la cinquième position pour insertion d'une capsule.

8. Unité d'infusion selon l'une quelconque des revendications précédentes, **caractérisée en ce que** le siège contenant une capsule du piston comprend dans sa partie intérieure un ressort pour expulser la capsule.
